(19) Europäisches Patentamt / European Patent Office / Office européen des brevets

(11) **EP 2 131 164 B1**

(12) **EUROPEAN PATENT SPECIFICATION**

(45) Date of publication and mention
of the grant of the patent:
**24.01.2018   Bulletin 2018/04**

(51) Int Cl.:
**G01F 23/00** *(2006.01)*          *G01F 23/296* *(2006.01)*

(21) Application number: **09394014.6**

(22) Date of filing: **08.06.2009**

(54) **A method and apparatus for determining level of material in a container**

Verfahren und Vorrichtung zur Bestimmung der Füllhöhe von Material in einem Behälter

Procédé et appareil pour déterminer le niveau de matériau dans un conteneur

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority:   **06.06.2008   IE 20080466**

(43) Date of publication of application:
**09.12.2009   Bulletin 2009/50**

(73) Proprietor: **Tekelek Patents Limited
Shannon, County Clare (IE)**

(72) Inventors:
• **Von Lintzgy, Martin Robert
Scariff
County Clare (IE)**
• **McCarthy, Peter Anthony
Liscannor
County Clare (IE)**

(74) Representative: **Gorman, Francis Fergus
F. F. Gorman & Co.
15 Clanwilliam Square
Dublin 2 (IE)**

(56) References cited:
**EP-A- 0 376 646          IE-A2- 20 030 882
US-A1- 2002 023 490     US-A1- 2007 103 324**

## Description

The present invention relates to a method and apparatus for determining the level of material in a container, and in particular, though not limited to a method and apparatus for determining the level of liquid in a container, for example, the level of oil in an oil tank, water in a water tank and the like, or the level of any material with fluid-like characteristics in a container, for example, powder material, granular material and the like. The invention also relates to a container comprising the apparatus.

Level sensors for determining the level of liquid or other materials with fluid-like characteristics in a container are known. For example, such a level sensor is disclosed in Irish Patent Specification No. S84011. The level sensor disclosed in Irish Patent Specification No. S84011 comprises a battery powered monitoring unit for mounting in or on a tank, the level of the contents of which is to be determined, and a separate mains electricity powered display unit which displays the level of liquid in the tank. The monitoring unit comprises an ultrasonic transducer which transmits ultrasonic signals to the surface of the liquid in the tank and monitors signals reflected from the surface of the liquid. By determining the time of flight of the signal, in other words, the time taken by a signal from the time it is transmitted until the reflection of the signal from the surface of the liquid is received by the transducer, the level of liquid in the tank can be readily determined, and this is determined by a microcontroller in the monitoring unit. A radio signal transmitter in the monitoring unit transmits a signal indicative of the level of liquid in the tank for reception by the display unit.

The display unit typically is adapted for plugging into an electrical socket, and comprises a radio receiver for receiving radio signals transmitted by the monitoring unit. A microcontroller located in the display unit interprets the received radio signals, and operates a liquid crystal display screen to graphically display the liquid level in the tank. So that the display unit is only responsive to signals received from the monitoring unit on the tank, the liquid level in which is to be monitored, the monitoring unit and the display unit are provided with respective unique identity codes. Prior to installing the monitoring unit on the tank, the monitoring and display units are brought together and are operated in a teaching mode whereby the unique code of the monitoring unit is taught to the display unit and vice versa.

In order to conserve power in the battery powered monitoring unit, and thus to extend the battery life, the monitoring unit is operated periodically to determine the level of liquid in the tank and to transmit a signal indicative of the liquid level to the display unit. The time period between each operation of the monitoring unit to determine the liquid level is dependent on the type of liquid, the level of which is to be determined. For example, in the case of monitoring oil level in an oil tank for supplying oil to a central heating boiler where the draw-off rate of oil from the tank is relatively low, the time period between each operation of the monitoring unit may be one hour or greater.

However, a disadvantage of such level sensors where the monitoring unit is operated to determine the liquid level at intervals of relatively long duration is that the level sensors are of no benefit in monitoring liquid level when a tank is being charged with a liquid, for example, when a central heating tank is being filled with oil. The person delivering oil into the tank must visually inspect the oil level as it rises within the tank. Since such tanks typically are of metal plate material or plastics material, and are opaque, the person delivering oil into the tank must look into the tank through a hatch through which the oil is being delivered into the tank. This is a difficult task and can be hazardous, and under certain conditions it is not always possible to identify the liquid level in a tank.

It is, however, known to provide handheld display units which can be connected into specially designed monitoring units. When the hand held display is connected into the monitoring unit, the hand held display can temporarily override the control system in the monitoring unit to cause the microcontroller in the monitoring unit to operate the ultrasonic transducer at shorter time intervals typically of one or a few seconds' duration. The radio transmitter of the monitoring unit is operated to output signals indicative of the oil level at the same short time intervals, which can be received by and displayed on the handheld display unit. Such handheld display units may be used during delivery of oil. However, such handheld display units, in general, are unsatisfactory, in that they are not compatible with all monitoring units. Furthermore, access to the monitoring unit may be impossible due to the fact that the monitoring unit may be located in an inaccessible position in the tank, for example, high up within the tank or within the skins of a double skin tank. There is therefore a need for a level sensor which addresses this problem.

European Patent Specification No. 0,376,646 of Matsumura discloses a system for radio transmission of level data of liquid contained in a tank and for converting the level data to volume data. The system of Matsumura determines the liquid level at time intervals of T1. When the liquid level is static or falling, signals indicative of the liquid level are transmitted at time intervals T2, which are longer than the time intervals T1. When the liquid level is rising, the system transmits the signals indicative of the liquid level at the time intervals T1.

U.S. Published Patent Application Specification No. 2002/0023490 of Burns discloses a system for determining liquid level in a tank and for transmitting a signal indicative of the liquid level. In the system of Burns the frequencies of measurement and data transmission depend on the desired sampling rate, and the measurement frequency may be adaptable to be speeded up when levels are changing rapidly, and to be slowed down when the liquid level is static.

There is also a need for a level sensor which minimises the power draw-off on a battery, even where the level sensor is not provided with a transmitter for transmitting a signal indicative of the level sensor, for example, a level sensor which includes a visual display for displaying graphically or otherwise the level of material in a container.

The present invention is directed towards an apparatus and a method for determining the level of a material with fluid-like characteristics in a container which address at least some of the problems of prior art level sensors, and the invention is also directed towards a container comprising the apparatus.

According to the invention there is provided apparatus for determining the level of a material with fluid-like characteristics in a container, the apparatus comprising a level determining means for determining the level of the material in the container and for outputting a signal indicative of the level of the material, a control means adapted for alternately operating the level determining means in one of a first operating mode in which the level determining means is operated for outputting the signal indicative of the level of the material in the container at first predefined time intervals and a second operating mode in which the level determining means is operated for determining the level of material in the container at second predefined time intervals, and for outputting the signal indicative of the level of the material in the container at the second predefined time intervals, the second predefined time intervals being shorter than the first predefined time intervals, and the control means being responsive to a change in the level greater than a trigger level change for switching the level determining means from the first operating mode to the second operating mode, wherein the level determining means is operated under the control of the control means in the first operating mode for determining the level of material in the container at third predefined time intervals, and the third predefined time intervals are shorter than the first predefined time intervals and are longer than the second predefined time intervals.

Preferably, the level determining means is operable under the control of the control means in the second operating mode for a first predefined time period.

In one embodiment of the invention the control means is responsive to the level change determined during a predefined number of consecutive ones of the third predefined time intervals being greater than a first predefined value of the trigger level change for operating the level determining means in the second operating mode.

In another embodiment of the invention the first predefined value of the trigger level change is greater than the level change which would result from a normal maximum draw-off rate of the material from the container during the predefined number of the consecutive third predefined time intervals.

Advantageously, the predefined number of the third predefined time intervals is one.

In a further embodiment of the invention prior to operating the level determining means in the second operating mode the control means is responsive to the level change determined during the predefined number of consecutive ones of the third predefined time intervals being greater than the first predefined value of the trigger level change for operating the level determining means in a third operating mode for determining if the level change determined during the predefined number of consecutive third predefined time intervals is a spurious value.

Preferably, the level determining means is operable under the control of the control means in the third operating mode for determining the level of material in the container at a predefined number of consecutive fourth predefined time interval.

Advantageously, the control means is responsive to the level change during the predefined number of the consecutive fourth predefined time interval being greater than a second predefined value of the trigger level change for operating the level determining means in the second operating mode.

Ideally, the second predefined value of the trigger level change is greater than the level change which would result from a normal maximum draw-off of the material from the container during the predefined number of the consecutive fourth predefined time intervals over which the level change is determined during the third operating mode of the level determining means.

In another embodiment of the invention values of the levels of the material determined during the third operating mode of the level determining means are sequentially stored by the control means, and prior to operating the level determining means in the second operating mode in response to the level change determined during the predefined number of consecutive fourth predefined time intervals being greater than the second predefined value of the trigger level change, the control means is responsive to the stored values of the levels stored during the third operating mode being indicative of a change in the liquid level for operating the level determining means in the second operating mode.

Preferably, the level determining means is operable in the third operating mode for a second predefined time period.

In one embodiment of the invention the fourth predefined time interval does not exceed 40 seconds. Preferably, the fourth predefined time interval does not exceed 20 seconds. Advantageously, the fourth predefined time interval lies in the range of 4 seconds to 10 seconds.

In another embodiment of the invention the third predefined interval does not exceed 60 seconds. Preferably, the third predefined interval does not exceed 30 seconds. Advantageously, the third predefined interval is in the range of 15 seconds to 20 seconds.

In another embodiment of the invention the first predefined time interval is significantly greater than the second predefined time interval. Preferably, the first predefined time interval is greater than the second predefined time interval by an order of magnitude of at least one thousand. Advantageously, the first predefined time interval is greater than the second predefined time interval by an order of magnitude of the order of three thousand.

In a further embodiment of the invention the first predefined time interval is at least 30 minutes. Preferably, the first predefined time interval is greater than 30 minutes. Advantageously, the first predefined time interval is of the order of 1 hour.

In another embodiment of the invention the second predefined time interval is less than 5 seconds. Preferably, the second predefined time interval is less 1 second. Advantageously, the second predefined time interval is of the order of half of 1 second.

In one embodiment of the invention a computing means is provided for computing a moving average value of the level of material in the container in response to each determined value of the level thereof when the level determining means is operating in one of the first and the second operating modes. Preferably, the signal indicative of the level of the material in the container outputted by the level determining means operating in the first and second operating modes is derived from the currently computed value of the moving average value of the level of material in the container.

Preferably, the moving average value of the level of material in the container is determined as a function of a predefined number of the most recently determined consecutive values of the level of the material in the container. Advantageously, the moving average value of the level of material in the container is determined as a function of at least the ten most recently determined consecutive values of the level of the material in the container. Preferably, the moving average value of the level of material in the container is determined as a function of at least the fifty most recently determined consecutive values of the level of the material in the container. Ideally, the moving average value of the level of material in the container is determined as a function of at least the hundred most recently determined consecutive values of the level of the material in the container.

In one embodiment of the invention the first predefined time period during which the level determining means is operated in the second operating mode is less than 30 minutes. Preferably, the first predefined time period during which the level determining means is operated in the second operating mode is less than 20 minutes. Advantageously, the first predefined time period during which the level determining means is operated in the second operating mode is approximately 10 minutes.

In another embodiment of the invention the second predefined time period during which the level determining means is operated in the second operating mode is not more than 3 minutes. Preferably, the second predefined time period during which the level determining means is operated in the second operating mode is not more than 2 minutes.

In another embodiment of the invention the level determining means comprises an ultrasonic level determining means. Preferably, the level determining means comprises a transmitting means for transmitting the signals indicative of the level of the material in the container.

Advantageously, the transmitting means comprises a radio transmitter.

In another embodiment of the invention the apparatus comprises a housing and a visual display screen, the visual display screen being responsive to the signals indicative of the level of the material in the container for displaying a representation of the level of the material in the container. Preferably, the visual display screen is responsive to the signals indicative of the level of the material in the container for producing a graphical representation of the level of the material in the container.

The invention also provides a container comprising the apparatus according to the invention.

Additionally, the invention provides a method for determining the level of a material with fluid-like characteristics in a container, the method comprising providing a level determining means for determining the level of the material in the container and for outputting a signal indicative of the level of the material, alternately operating the level determining means in a first operating mode in which the level determining means is operated for outputting the signal indicative of the level of the material in the container at first predefined time intervals, and in a second operating mode for determining the level of material in the container at second predefined time intervals and for outputting the signal indicative of the level of the material in the container at the second predefined time intervals, the level determining means being operated in the second operating mode in response to a change in the level being greater than a trigger level change, and the second predefined time intervals being shorter than the first predefined time intervals, wherein the level determining means is operated in the first operating mode for determining the level of material in the container at third predefined time intervals, the third predefined time intervals being shorter than the first predefined time intervals and being longer than the second predefined time intervals.

Preferably, the level determining means is operated under the control of the control means in the second operating mode for a first predefined time period.

The advantages of the invention are many. A particularly important advantage of the invention is that the power requirement of the monitoring unit is minimised, thus facilitating powering of the monitoring unit by a battery, which due to the minimisation of the power requirement of the monitoring unit, the battery life of a battery powering the monitoring unit is significantly extended. This is achieved by virtue of the fact that during periods while the draw-off of material from the tank is normal, and during periods during which no draw-off of material occurs, the monitoring unit is operated in the first operating mode. Since in the first operating mode, the monitoring unit is only operated to output signals indicative of the level of material in the container at first predefined time intervals of relatively long duration, typically of the order of one hour duration, the power requirement of the monitoring unit when operating in the first operating mode is minimised. This is particularly so in cases where the means for outputting the signals indicative of the material level is a radio transmitter, since the power requirement of a radio transmitter is relatively high while transmitting. The power requirement of the level determining means, in general, is relatively low, and where the level determining means is provided by an ultrasonic transducer, the power requirement of the level determining means is particularly low. Thereby, the level determining means can be operated at the third predefined time intervals of relatively short duration in order to detect a rising material level or an abnormal falling material level with a relatively low power requirement. Additionally, since the monitoring unit is only operated in the second operating mode for relatively short first time periods of duration of the order of ten minutes during which the monitoring unit is operated to output signals indicative of the level of material in the container at relatively short periods of the order of half of one second, the power requirement of the monitoring unit is also minimised.

A further advantage of the invention is that false alarms are avoided when the monitoring unit is adapted to operate in the third operating mode as well as in the first and second operating modes. During operation of the monitoring unit in the third operating mode, a determination is made as to whether signals received from the level determining means which are indicative of a rising material level or an abnormally high falling material level during the first operating mode are spurious signals or otherwise. This minimises the risk of false alarms from the monitoring unit.

Where the monitoring unit is provided with a visual display screen, and the control means is responsive to a rising material level for operating the visual display screen on the monitoring unit for displaying a representation of the level of material in the container, the rising level of material in the container can be monitored during filling of the container. However, if the visual display screen of the monitoring unit has a relatively low power requirement, such as would be the case if the visual display screen were provided as a liquid crystal display screen, the visual display screen could be continuously powered and would be updated to display the last determined material level.

The invention will be more clearly understood from the following description of some preferred embodiments thereof, which are given by way of example only, with reference to the accompanying drawings, in which:

Fig. 1 is a block representation of apparatus according to the invention for determining the level of material with fluid-like characteristics in a container,

Fig. 2 illustrates a flowchart of the operation of the apparatus of Fig. 1,

Fig. 3 is a block representation of a part of apparatus according to another embodiment of the invention for determining the level of material with fluid-like characteristics in a container, and

Fig. 4 illustrates a flowchart of a part of the operation of the apparatus of Fig. 3.

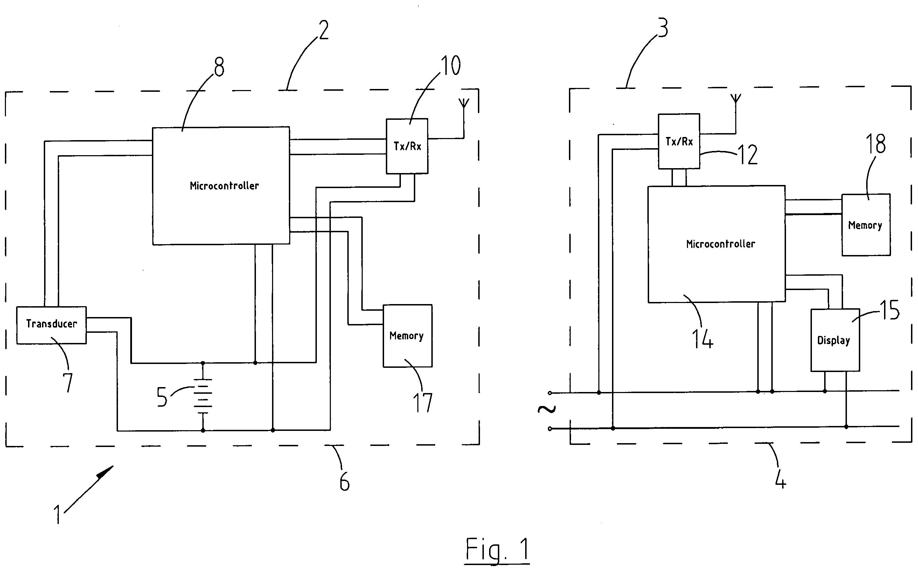

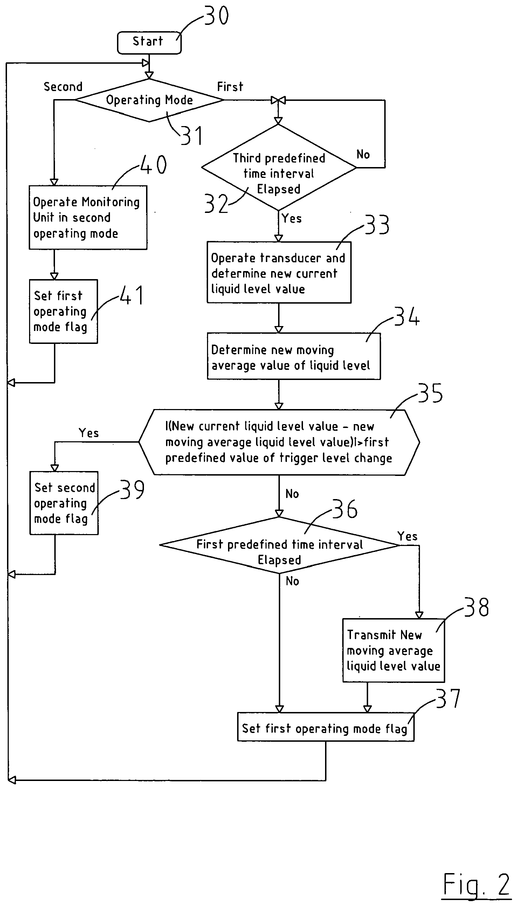

Referring to the drawings and initially to Figs. 1 and 2 thereof, there is illustrated apparatus according to the invention, indicated generally by the reference numeral 1, for determining the level of material with fluid-like characteristics in a container (not shown). In this embodiment of the invention the apparatus 1 is particularly suitable for determining the level of liquid in a container, such as central heating oil in a tank (not shown) of a central heating system (also not shown). The apparatus 1 comprises a monitoring unit 2 for mounting in or on the tank for determining the liquid level therein, and a display unit 3 for mounting remotely of the monitoring unit 2, typically, in a house or the like. The display unit 3 is mains electricity powered, and typically comprises a housing 4, illustrated by broken lines in Fig. 1, with electrical contact pins (not shown) extending therefrom for engaging an electrical socket of a mains electricity supply from which the display unit 3 is powered. The monitoring unit is battery powered, and is powered by a 3 volt lithium disc battery 5 of the type commonly referred to as a button cell.

The monitoring unit 2 is housed in a housing 6, illustrated in broken lines in Fig. 1, and comprises a level determining means, namely, an ultrasonic transducer 7 which is operated under the control of a control means provided by a microcontroller 8 for periodically transmitting bursts of ultrasonic signals to the surface of the liquid in the tank. A receiver in the transducer 7 is responsive to reflections of the ultrasonic signals from the liquid surface and outputs a reflection detect signal to the microcontroller 8 in response to a reflection of the ultrasonic signals being detected. The microcontroller 8 is programmed to determine the level of the liquid in the tank by determining the time of flight of the ultrasonic signals of each burst of ultrasonic signals, the flight time being the time taken between the transmission of a burst of the ultrasonic signals and the detection of the first reflection from the surface of the liquid. From the time of flight of the ultrasonic signals the microcontroller 8 is programmed to produce a signal indicative of the current liquid level in the tank. The microcontroller 8 is programmed to determine a moving average of the liquid level in the tank from a predetermined number of the most recent consecutive liquid level values, which in this embodiment of the invention is based on the most recent one hundred consecutive determined values of the liquid level in the tank.

An output means, comprising a radio transmitter or transceiver, which in this case is a radio transceiver 10 in the monitoring unit 2 is operated under the control of the microcontroller 8 for transmitting signals indicative of the current liquid level for reception by a transceiver 12 in the display unit 3.

A microcontroller 14 in the display unit 3 reads the signals indicative of the current liquid level received by the transceiver 12 in the display unit, and operates a display screen, in this case a liquid crystal display screen 15 for displaying a graphical representation of the current liquid level on the liquid crystal display screen 15.

So that the display unit 3 is only responsive to signals indicative of the liquid level received from the monitoring unit 2, both the monitoring unit 2 and the display unit 3 are provided with respective unique identity codes which are stored in memories 17 and 18 in the respective units 2 and 3. Prior to installing the monitoring unit 2 in or on the tank, the monitoring and display units 2 and 3 are brought into close proximity with each other when the display unit 3 is initially powered up, so that a magnet (not shown) in the display unit operates a reed switch (not shown) in the monitoring unit 2 for putting the monitoring unit 2 and the display unit 3 into a teaching mode. While in the teaching mode the unique identity code of each of the units 2 and 3 is taught to the other of the units 2 and 3. This aspect of the monitoring unit 2 and the display unit 3 is described in detail in Irish Patent Specification No. S84011 and further description should not be required.

Since operation of the radio transceiver 10 of the monitoring unit 2 causes a large draw-off of power from the battery 5 of the monitoring unit 2, the microcontroller 8 is programmed to operate the monitoring unit 2 alternately in one of a first operating mode and a second operating mode. The monitoring unit 2 is operated in the first operating mode initially and when the rate at which the liquid level in the tank is falling does not exceed a normal maximum rate of draw-off of liquid from the tank and when the liquid level remains constant. The microcontroller 8 operates the monitoring unit 2 in the second operating mode when the rate of change of the liquid level in the tank exceeds that which would correspond to a normal maximum draw-off rate of liquid from the tank, for example, as a result of a leak from the tank or an unauthorised draw-off of liquid from the tank. The microcontroller 8 also operates the monitoring unit 2 in the second operating mode when the liquid level in the tank is rising, for example, as a result of the tank being filled.

During the first operating mode of the monitoring unit 2 the radio transceiver 10 is operated at first predefined time intervals of approximately one hour for transmitting the signal indicative of the current liquid level in the tank for reception by the display unit 3. During the second operating mode of the monitoring unit 2, the microcontroller 8 operates the radio transceiver 10 to transmit the signal indicative of the current liquid level in the tank during second predefined time intervals of 0.5 seconds. Additionally, during periods while the microcontroller 8 is operating the monitoring unit 2 in the first operating mode, the microcontroller 8 operates the transducer 7 to produce a burst of ultrasonic signals at third predefined time intervals of 15 seconds' duration, and to output the corresponding reflection detect signal, from which a new current liquid level value is computed by the microcontroller 8. During periods when the monitoring unit 2 is operated in the second operating mode, the microcontroller 8 operates the transducer 7 to produce a burst of ultrasonic signals at predefined time intervals, which are of similar duration to the duration of the second predefined time intervals of 0.5 seconds, and to output the corresponding reflection detect signal, from which a new current liquid level value is computed by the microcontroller 8.

Initially, the microcontroller 8 is programmed to operate the monitoring unit 2 in the first operating mode, and at the end of each third predefined time interval, on determining the new current liquid level value, and on computing the new moving average value to include the new current liquid level value, the microcontroller 8 is programmed to compare the new current liquid level value with the new moving average value to determine the change in the liquid level value during the just expired third predefined time interval. If the change in the liquid level during the just expired third predefined time interval is less than a first predefined value of a trigger level change, the microcontroller 8 is programmed to continue to operate the monitoring unit 2 in the first operating mode. Otherwise, if the change in the liquid level value during the just expired third predefined time interval is greater than or equal to the first predefined value of the trigger level change, the microcontroller 8 is programmed to operate the monitoring unit 2 in the second operating mode. The first predefined value of the trigger level change is selected to be a value just greater than the level change which would occur in the liquid level during one of the third predefined time intervals if the liquid level in the tank were falling as a result of a leak or an unauthorised draw-off of liquid from the tank. In other words, the first predefined value of the trigger level change is selected to be just greater than the liquid level change which would occur during one third predefined time period if the draw-off rate of liquid from the tank were just greater than the normal maximum draw-off rate. By comparing the absolute value of the currently computed level change with the first predefined value of the trigger level change, both a rising liquid level due to filling of the tank and an abnormally high falling liquid level are detected.

The microcontroller 8 is programmed to operate the monitoring unit 2 in the second operating mode for a predefined first time period, which in this embodiment of the invention is 10 minutes. When the predefined first time period of 10 minutes has timed out, the microcontroller 8 switches the monitoring unit 2 from operating in the second operating mode to the first operating mode. The predefined first time period of 10 minutes in which the monitoring unit 2 is operated in the second operating mode is sufficiently long to allow the tank (not shown) to be filled from empty, and also, is sufficient to provide a warning of leaking or unauthorised draw-off of liquid from the tank. In general, the capacity of normal domestic central heating oil tanks is in the range of 800 litres to 2,000 litres. Such capacities, in general, are sufficient to heat a normal domestic dwelling for a period of three months to nine months. In general, it takes in the range of five minutes to ten minutes to fill such a tank, and theft of oil from such a tank would also take in the range of five minutes to ten minutes or more. Thus, the monitoring unit 2 is ideally suited for use with a domestic central heating oil tank. However, it will be readily apparent that the monitoring unit 2 may be programmed to operate with different values of first, second and third predefined time intervals and a different value of the first predefined time period, and these would be determined depending on the capacity of the tank, the material in the tank as well as the normal draw-off and filling rates of the tank.

Referring now to Fig. 2, there is illustrated a flowchart of a subroutine which is executed by the microcontroller 8 of the monitoring unit 2 during operation of the monitoring unit 2. Block 30 commences the subroutine, and the subroutine moves to block 31. Block 31 checks the operating mode in which the monitoring unit should operate. On initialisation of the monitoring unit, block 31 selects the first operating mode, and the subroutine moves to block 32. Block 32 determines if the third predefined time interval of 15 seconds has elapsed since initialisation or since the transducer 7 was last operated to produce a burst of ultrasonic signals in order to determine the new current level of the liquid in the tank. The subroutine cycles around block 32 until the third predefined time interval of 15 seconds has elapsed since initialisation of the monitoring unit or since the last burst of ultrasonic signals was produced by the transducer 7. On block 32 determining that the third predefined time interval of 15 seconds has elapsed, the subroutine moves to block 33. Block 33 operates the transducer 7 to produce a burst of ultrasonic signals, and the microcontroller 8 reads the reflection detect signal from the transducer 7, and computes the new current liquid level value of the liquid in the tank. The subroutine then moves to block 34, which determines a new moving average value of the liquid level, which in this embodiment of the invention is based on the one hundred most recent consecutive determined liquid level values including the new current liquid level value.

The new moving average liquid level value is determined from the equation:

$$NMAV = (PMAV * (F-1) + NCLLV)/F$$

where

NMAV is the new moving average value of the liquid level value,
PMAV is the previous moving average value of the liquid level value,
NCLLV is the new current liquid level value, and
F is a constant, and in this embodiment of the invention is equal to 100, namely, the number of liquid level values on which the new moving average value is based.

Once the new moving average value of the liquid level has been determined, block 34 stores the new moving average value, and the flowchart moves to block 35. Block 35 compares the new current liquid level value with the new moving average liquid level value, and determines if the absolute value of the change between the new current liquid level value and the new moving average liquid level value is greater than the first predefined value of the trigger level change. Block 35 determines the change between the new current liquid level value and the new moving average liquid level value by subtracting the new moving average value from the new current liquid level value and taking the absolute value of the difference. The absolute value of the difference is compared with the first predefined value of the trigger level change. If the absolute value of the difference is not greater than the first predefined value of the trigger level change indicating that during the just expired third predefined time interval the liquid level remained constant, or if it fell the fall in the liquid level resulted from the normal draw-off of the liquid from the tank. Similarly, if the absolute value of the difference appeared to result from a rising liquid level, the rise in the liquid level would have been so small, the apparent rise would most likely have resulted from a spurious signal from the transducer 7, and could be ignored. Block 35 moves the subroutine to block 36. Block 36 checks if the first predefined time interval of 1 hour has elapsed since the radio transceiver 10 was last operated to transmit the signal indicative of the new moving average value of the liquid level. If not, the subroutine moves to block 37, which sets a flag to indicate that the monitoring unit 2 is to continue operating in the first operating mode, and the subroutine is returned to block 31, which has already been described. On block 31 determining from the flag set by block 37 that the monitoring unit 2 is to continue to operate in the first operating mode, block 31 moves the subroutine to block 32.

On the other hand, if block 36 determines that the first predefined time interval of 1 hour has elapsed, the subroutine moves to block 38, which operates the radio transceiver 10 to transmit the signal indicative of the new moving average value of the liquid level which was stored by block 34. The subroutine is then moved to block 37, which has already been described.

On the other hand, if block 35 determines that the absolute value of the difference between the new current liquid level value and the new moving average value is greater than the first predefined value of the trigger level change, indicating either an abnormal draw-off of liquid from the tank or filling of the tank, block 35 moves the subroutine from block 35 to block 39. Block 39 sets a flag to indicate that the monitoring unit 2 is to be operated in the second operating mode, and returns the subroutine to block 31.

If block 31 determines that the monitoring unit 2 is to be operated in the second operating mode, the subroutine is moved to block 40. Block 40 commences operation of the monitoring unit 2 in the second operating mode. On being moved to block 40, block 40 sets a timer to time the first predefined time period of ten minutes. Block 40 operates to produce a burst of ultrasonic signals at the second predefined time intervals 0.5 second, and the microcontroller 8 is programmed to compute a new current liquid level value and a new moving average liquid level value as already described after each burst of ultrasonic signals. On the new moving average liquid level value being computed, block 40 operates the transceiver 10 of the monitoring unit 2 to transmit the radio signals indicative of the new moving average value of the liquid level at the second predefined time intervals of 0.5 second. At the end of each second predefined interval block 40 checks if the first predefined time period of ten minutes has elapsed, and if not, the subroutine continues to operate in the second operating mode. When the first predefined time period of 10 minutes has elapsed, block 40 moves the subroutine to block 41, which sets a flag to indicate that the monitoring unit 2 is to be operated in the first operating mode, and moves the subroutine to block 31, which has already been described.

The microcontroller 14 of the display unit 3 on reading each radio signal indicative of the new moving average value of the liquid level received by the transceiver 12 from the monitoring unit 2 updates the liquid level which is displayed graphically on the liquid crystal display screen 15.

A person filling the tank may be provided with a handheld radio receiver unit which would be adapted for receiving the signals indicative of the moving average values of the liquid level from the monitoring unit 2. The handheld radio receiver unit would also be provided with a visual display screen for displaying a numerical or a graphical representation or both of the liquid level in the tank. The person filling the tank would operate the handheld radio receiver unit to receive the radio signals transmitted by the radio transceiver 10 of the monitoring unit 2, so that the person filling the tank would have a readout from the visual display screen on the handheld radio receiver unit of the liquid level in the tank.

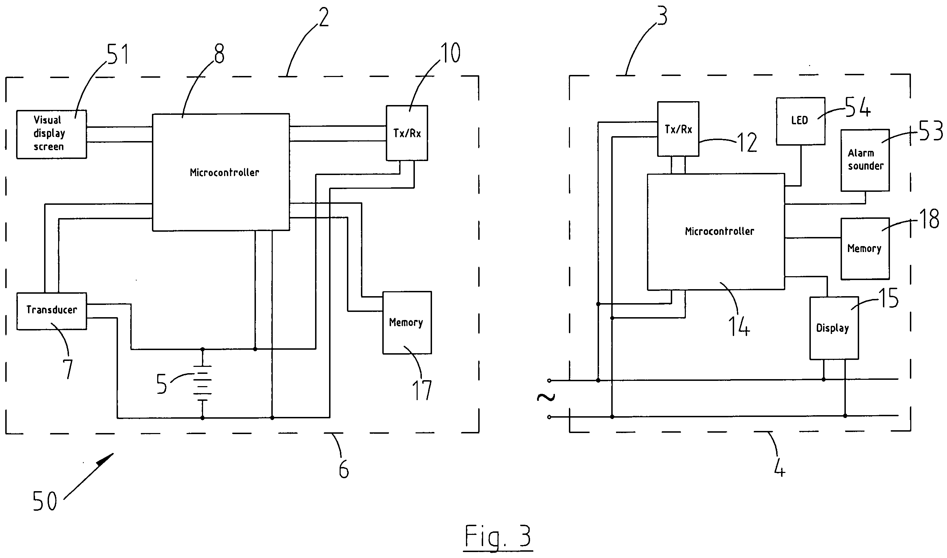

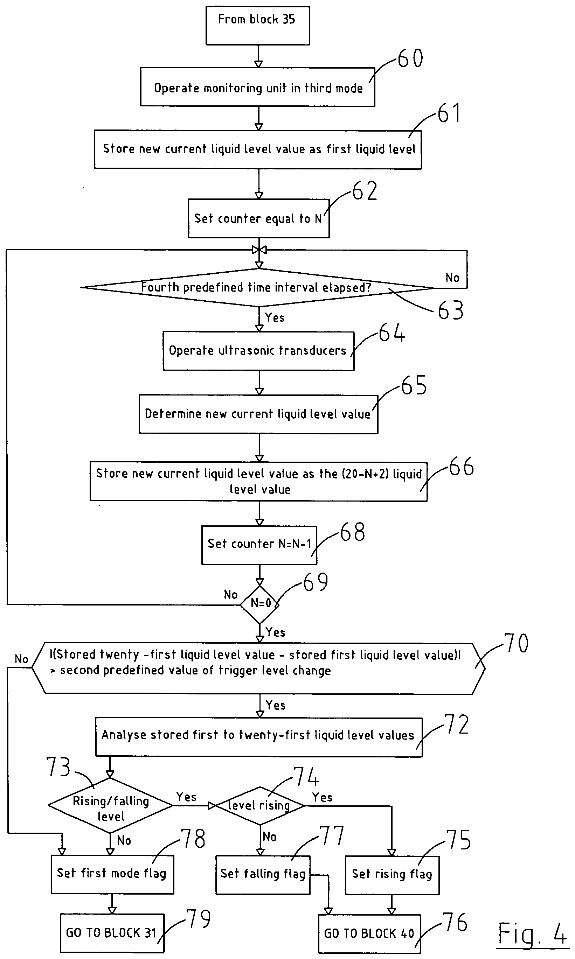

Referring now to Figs. 3 and 4, there is illustrated apparatus according to another embodiment of the invention, indicated generally by the reference numeral 50, for determining the level of material with fluid-like characteristics in a container (not shown), which in this embodiment of the invention is particularly suitable for determining the level of liquid in a container, such as central heating oil in a central heating oil tank (not shown) of a central heating system (also not shown). The apparatus 50 is substantially similar to the apparatus 1 and similar components are identified by the same reference numerals. The main difference between the apparatus 50 and the apparatus 1 is that firstly, the microcontroller 8 of the monitoring unit 2 is programmed in order to minimise false alarms as a result of spurious signals from the ultrasonic transducer 7, and secondly, the monitoring unit 2 is provided with a visual display screen 51 for displaying a graphical representation of the liquid level in the tank. In this embodiment of the invention the visual display screen 51 is a liquid crystal display screen which has a low power requirement, and accordingly, is continuously powered on. The graphical representation of the liquid level on the visual display screen 51 is continuously updated by the microcontroller 8 as each new moving average value of the liquid level is computed by the microcontroller 8. However, in the event that the visual display screen 51 was of a type which had a higher power requirement, in order to conserve energy in the battery 5, the visual display screen 51 would only be operated when the tank is being filled with liquid.

The microcontroller 8 is operated under the control of a subroutine which is substantially similar to the subroutine illustrated in Fig. 2 of the apparatus 1, with the exception that when block 35 determines that the absolute value of the difference between the new current liquid level value and the new moving average liquid level value is greater than the first predefined value of the trigger level change, instead of moving the subroutine to block 39 of the subroutine of Fig. 2, block 35 calls up a second subroutine illustrated in Fig. 4. The second subroutine of Fig. 4, which is described in detail below, operates the monitoring unit 2 in a third operating mode for determining if the new current liquid level value determined by block 33 resulted from a spurious signal read from the ultrasonic transducer 7, in order to minimise false alarms, which would otherwise result from spurious signals from the ultrasonic transducer 7.

The microcontroller 8 is programmed to operate the monitoring unit 2 in the third operating mode for a second predefined time period of 120 seconds. In the third operating mode the microcontroller 8 is programmed to operate the transducer 7 to produce a burst of ultrasonic signals at fourth predefined time intervals each of 6 seconds during the second predefined time period. While the microcontroller 8 is operating the monitoring unit 2 in the third operating mode, the microcontroller 8 is programmed to determine the new current liquid level value from the signals received from the ultrasonic transducer 7 at the end of each fourth predefined time interval. The respective determined new current liquid level values determined during the second predefined time period are stored and identified consecutively as second, third, fourth, etc. liquid level values. The last new current liquid level value determined by block 33 while the monitoring unit 2 was last operating in the first operating mode is stored as the first liquid level value.

In this embodiment of the invention during the second predefined time period while the monitoring unit 2 is being operated in the third operating mode, the microcontroller 8 does not compute a moving average value of the liquid level. At the end of the second predefined time period, the microcontroller 8 is programmed to compare the last stored liquid level value determined by the microcontroller 8, which is the stored liquid level value which is identified as the stored twenty-first liquid level value with the stored first liquid level value, which is the last new liquid level value determined by block 33 when the monitoring unit 2 was operating in the first operating mode.

If the absolute difference between the twenty-first stored liquid level value and the first stored liquid level value is indicative of a liquid level change greater than a second predefined value of the trigger level change, the microcontroller 8 is programmed to analyse the stored first to the twenty-first liquid level values. The second predefined value of the trigger level change is selected to be a value just greater than the fall in the liquid level in the tank which would result during the second predefined time period of 120 seconds if the liquid was being drawn-off from the tank at the normal maximum draw-off rate. If the result of the analysis of the first to the twenty-first stored liquid level values is indicative of either a rising or a falling liquid level in the tank, the microcontroller 8 is programmed to confirm that the change in liquid level in the tank is indicative of the tank being filled or liquid being drawn-off from the tank at an abnormal rate, as the case may be, and to operate the monitoring unit 2 in the second operating mode.

The microcontroller 8 may be programmed to analyse the stored first to the twenty-first liquid level values using any suitable analysis tool. In this embodiment of the invention the microcontroller 8 is programmed to carry out an analysis subroutine which is based on a "least square fit" technique to determine the rate of rising or falling of the liquid level, and provided that the stored first to the twenty-first liquid level values do not deviate significantly from the rising or falling rate by applying a suitable standard deviation formula, then the microcontroller 8 determines that the stored first to the twenty-first liquid level values are indicative of a rising or a falling liquid level as the case may be.

In the event that either the absolute difference between the stored twenty-first liquid level value and the stored first liquid level value is less than the second predefined value of the trigger level change, or if the analyses of the stored first to the twenty-first liquid level values are indicative of neither a rising nor a falling liquid level, the microcontroller 8 reverts to operating the monitoring unit 2 in the first operating mode.

Operation of the monitoring unit 2 of the apparatus 50 in the second operating mode is similar to operation of the monitoring unit 2 of the apparatus 1 in the second operating mode, with the exception that when the microcontroller 8 determines that the liquid level is falling, as well as the transceiver 10 being operated to output the new moving average value of the liquid level at the second predefined time intervals of 0.5 seconds, the microcontroller 8 also operates the transceiver 10 to transmit an alarm signal for reception by the display unit 3. The microcontroller 14 of the display unit 3 on receiving the alarm signal through the transceiver 12 activates a human sensory perceptible signal, namely, an audible alarm unit, such as a piezoelectric sounder 53 mounted in the display unit 3 to produce an audible signal, or additionally or alternatively, the display unit 3 may be provided with a light emitting diode 54 to produce a visual alarm signal. It is also envisaged that instead of the microcontroller 8 of the monitoring unit 2 being programmed to output the alarm signal, the microcontroller 14 of the display unit 3 may be programmed to determine from the sequentially received new moving average values of the liquid level when the monitoring unit 2 is operating in the second operating mode if the new moving average values are indicative of a falling liquid level, and if so, the piezoelectric sound 53 and/or the light emitting diode 54 would be activated.

Turning now to the flowchart of Fig. 4. As mentioned above, the microcontroller 8 of the monitoring unit 2 operates under the control of the flowchart of Fig. 2. However, when the monitoring unit 2 is being operated by the microcontroller 8 in the first operating mode, and when block 35 of the subroutine of Fig. 2 determines that the absolute value of the difference between the new current liquid level value and the new moving average liquid level value is greater than the first predefined value of the trigger level change, block 35 instead of moving the subroutine to block 39 of the subroutine of Fig. 2, calls up the second subroutine of Fig. 4 and transfers operation of the microcontroller 8 to the second subroutine of Fig. 4.

On the second subroutine being called up, block 60 starts the second subroutine and causes the microcontroller 8 to operate the monitoring unit 2 in the third operating mode. The subroutine then moves to block 61, which stores the new current liquid level value determined by block 33 of the subroutine of Fig. 2 as the first liquid level value in the memory 17. The subroutine then moves to block 62, which sets a counter to the value N, which in this embodiment of the invention is twenty. The subroutine then moves to block 63, which checks if the fourth predefined time interval of 6 seconds has elapsed, and if not, the subroutine remains in block 63 until the fourth predefined time interval of 6 seconds has elapsed, at which stage the subroutine moves to block 64. Block 64 operates the ultrasonic transducer 7 to produce a burst of ultrasonic signals and to return the reflection detect signal which is read by the microcontroller 8. The subroutine then moves to block 65 which operates the microcontroller 8 to determine the new current liquid level value, and the subroutine moves to block 66, which stores the new current liquid level in the memory 17 as the (20-N+2) liquid level value.

The subroutine then moves to block 68, which decrements the counter by one by putting N equal to N-1, and the subroutine then moves to block 69. Block 69 checks if N is equal to zero. If not, the subroutine is returned to block 63, which has already been described. When block 69 determines that N is equal to zero, the subroutine moves to block 70.

Block 70 compares the last stored liquid level value, which is the twenty-first liquid level value with the stored first level value, and if the absolute difference between the stored twenty-first and the first level value is greater than the second predefined value of the trigger level change, thus indicating a rising liquid level or an abnormal falling level in the tank, the subroutine moves to block 72.

Under block 72 the microcontroller 8 analyses the stored first to the twenty-first liquid level values to ascertain if they are indicative of a rising or falling liquid level using the analysis tool described above. The subroutine then moves to block 73, which checks from the analysis carried out by block 72 if the stored first to the twenty-first liquid levels are indicative of either a rising or falling liquid level, and if they are indicative of a rising or falling liquid level, the subroutine moves to block 74. Block 74 determines if the liquid level is rising or falling. If block 74 determines that the liquid level is rising, the subroutine moves to block 75 which sets a flag indicative of a rising liquid level, and the subroutine moves to block 76. Block 76 returns control of the microcontroller 8 to the subroutine of Fig. 2 and returns the control of the microcontroller 8 to block 40 of the subroutine of Fig. 2.

On the other hand, if block 74 determines that the liquid level is falling, the subroutine is moved to block 77, which sets a flag indicative of a falling liquid level, and the subroutine is moved to block 76, which as already described returns control of the microcontroller 8 to block 40 of the subroutine of Fig. 2.

Returning now to block 70, if block 70 determines that the absolute difference between the stored twenty-first liquid level value and the stored first liquid level value is not greater than the second predefined value of the trigger level change, the subroutine is moved to block 78, which sets a flag to indicate that the monitoring unit is to be operated in the first operating mode. The subroutine then moves to block 79, which returns control of the microcontroller 8 to the subroutine of Fig. 2 and returns the control of the microcontroller 8 to block 31, which has already been described with reference to the apparatus 1.

Returning now to block 73, should block 73 determine that the analysis carried out by block 72 that the stored first to the twenty-first liquid level values are not indicative of a rising or a falling liquid level, the subroutine is moved to block 78, which has already been described.

Returning now to block 40 of the flowchart of Fig. 2, in this embodiment of the invention the operation of block 40 is substantially similar to that of the apparatus 1 of Figs. 1 and 2, with the exception that when block 40 detects the flag set by block 77, which is indicative of the liquid level falling at an abnormally high rate, as well as operating the transceiver 10 to transmit the new moving average values of the liquid level at the second predefined time intervals, block 40 also operates the microcontroller 8 to output an alarm signal through the transceiver 10 for reception by the display unit 3.

Otherwise, operation of the apparatus 50 is similar to that of the apparatus 1. When a falling liquid level indicative of an abnormal draw-off of liquid from the tank is determined with the monitoring unit 2 operating in the first operating mode, and the abnormal falling liquid level is confirmed when the monitoring unit 2 is operating in the third operating mode, the monitoring unit 2 is then operated in the second operating mode to determine new moving average values of the liquid level at the second predefined time intervals of 0.5 seconds and to transmit signals indicative of the new moving average values of the liquid level at the second predefined time intervals. In the second operating mode when the liquid level is falling, the monitoring unit 2 is operated to transmit the alarm signal also.

When the liquid level is determined as being rising when the monitoring unit 2 is operating in the first operating mode, and the rising liquid level is confirmed when the monitoring unit 2 is operating in the third operating mode, the monitoring unit is then operated in the second operating mode for determining the new moving average values of the liquid level at the second predefined time intervals of 0.5 seconds and transmitting the signals indicative of the new moving average values of the liquid level at the second predefined time intervals. This, thus, allows a person filling the tank who is provided with a handheld radio receiver unit which includes a visual display screen and which is capable of receiving the transmitted signals from the monitoring unit 2 indicative of the new moving average values of the rising liquid level to monitor the liquid level in the tank on the handheld radio receiver unit during filling of the tank.

Even although the monitoring unit 2 in this embodiment of the invention is provided with a visual display screen 51 which continuously displays and continuously updates the graphical representation of the liquid level in the tank, the monitoring unit 2 may not always be visible to a person filling the tank. In many cases, the filling point for a tank may be provided remotely of the tank, which would prevent visual access to the visual display screen 51 of the monitoring unit 2. It will be readily apparent to those skilled in the art that there are many other occasions when a person filling a tank may not have visual access to the monitoring unit 2, and in which case, by providing the person filling the tank with a suitable handheld radio receiver unit with a visual display screen adapted to receive signals from the monitoring unit 2, such a person would be readily easily able to monitor the filling of the tank on the handheld unit without requiring visual access to the visual display screen 51 of the monitoring unit 2.

While the apparatus 1 described with reference to Figs. 1 and 2 has not been described as producing an alarm signal in the event of an abnormal falling liquid level, the apparatus 1 may be operated to produce such an alarm signal. The alarm signal may be transmitted through the transceiver 10 of the monitoring unit 2, and on receipt of the alarm signal, the microcontroller in the display unit 3 would operate either an audible alarm unit or a light emitting diode in the visual display unit to produce an audible or visual alarm signal, as the case may be, or both. Alternatively, the microcontroller of the display unit 3 of the apparatus 1 may be programmed to identify from the new moving average liquid level signals received from the monitoring unit 2 an abnormal falling liquid level, and the microcontroller 14 would then output an alarm signal to activate either or both an audible alarm unit or a light emitting diode or other such visual signal producing means in the display unit 3.

While the apparatus and method according to the invention have been described for switching the monitoring unit from the first operating mode to the second operating mode in response to an unusual level change, which could have resulted from the liquid level rising, or falling at an unusual rate, it is envisaged that in certain cases, the microcontroller may be programmed to operate the monitoring unit in the second operating mode in response to the liquid level rising only.

While first, second, third and fourth predefined time intervals have been described as being of specific values, the first, second, third and fourth predefined time intervals may be of any suitable values, and in general, will be determined by the normal draw-off rate of liquid from the tank, and may also be determined by the capacity of the tank, and will obviously be determined by the accuracy with which the liquid level is to be displayed. It is also envisaged that the trigger level change value for operating the monitoring unit in the second operating mode when the liquid level is rising may be different to the trigger level change value for operating the monitoring unit in the second operating mode when the liquid level is falling. Additionally, the number of consecutive current liquid level values from which the moving average of the liquid level is to be computed will be determined by the time constant over which the moving average of the liquid level value is to be determined, and this will be dictated by the accuracy with which the level change is required to be determined, and the normal draw-off rate of liquid from the tank.

It will of course be appreciated that the first predefined time period during which the monitoring unit is operated in the second operating mode may be any suitable time period other than ten minutes, and will largely be determined y the length of time it takes to fill the tank from empty. Similarly, it will be appreciated that the second predefined time period during which the monitoring unit is operated in the third operating mode may be any other suitable time period other than 120 seconds, and will also largely be determined by the time it takes to fill the tank from empty, and the level of confidence with which signals from the transducer 7 are to be determined as being valid or spurious, particularly in the case of a falling liquid level.

While the apparatus and method have been described for use in connection with a monitoring unit and a display unit whereby signals indicative of the liquid level in the tank are transmitted from the monitoring unit to the display unit, in certain cases, it is envisaged that the apparatus may be provided with a monitoring unit only, which would, in general, include a display means for displaying the liquid level in the tank. In which case, the control means would operate the monitoring unit for updating the display means of the liquid level at the first predefined time intervals, and the third predefined time intervals, which may be the same or different to the first and second predefined time intervals which have been described, but if different, the first predefined time intervals would be of duration less than the duration of the first predefined time intervals described, and the second predefined time intervals may also be of duration less than those described. Needless to say, in the case where a monitoring unit only is provided, the monitoring unit would still be provided with a radio transmitter or a radio transceiver, since as already described, the visual display screen of the monitoring unit may not always be visible to a person filling the tank, and thus, by providing a person filling the tank with a handheld radio receiver with a display screen adapted for receiving the transmitted signals indicative of the liquid level in the tank, such a person can monitor the filling of the tank on the handheld radio receiver unit.

It is also envisaged that the monitoring unit may be provided with a tamper detecting means which would detect tampering with the monitoring unit or removal of the monitoring unit from the tank. In which case, it is envisaged that on tampering being detected, the radio transceiver or transmitter of the monitoring unit would transmit a tamper alert signal to the display unit indicating tampering with the monitoring unit. The remote unit would be provided with an alert means, such as a visual or an aural alert means, for example, a light or an alarm which would be triggered in response to reception of the tamper alert signal.

While the apparatus has been described for use in monitoring liquid level in a tank, it will be readily apparent to those skilled in the art that both the apparatus and method may be used for monitoring the level of any material with fluid-like characteristics in a container, for example, granular material, powder material, particulate material and the like.

While the monitoring unit and the display unit of the apparatus described have been described as being provided with radio transceivers, in certain cases, it is envisaged that the monitoring unit may be provided with a radio transmitter only, and the display unit would be provided with a radio receiver only.

While the visually perceptible means for indicating an alarm condition which is provided on the display unit has been described as being a light emitting diode, any other suitable visual alerting means may be provided. Indeed, in certain cases, it is envisaged that the visual display screen of the display unit may be operated to flash in response to the display unit receiving an alarm signal.

While the monitoring unit of the apparatus 50 which has been described with reference to Figs. 3 and 4 has been described when operating in the third operating mode as carrying out an analysis of the stored first to the twenty-first liquid level values, while this is desirable, it is not essential, and in certain cases, the analysing of the stored first to the twenty-first liquid level values when the monitoring unit is operating in the third operating mode may be dispensed with. Additionally, it will be appreciated that where such an analysis of the stored first to the twenty-first liquid level values are analysed, any other suitable analysis technique may be used for determining if the stored first to the twenty-first liquid level values are indicative of either a rising or a falling liquid level. It will also be appreciated that when the monitoring unit of the apparatus 50 is operating in the third operating mode, any number of new current liquid level values may be obtained. For example, instead of obtaining twenty new current liquid level values during the third operating mode, a greater or a lesser number of new current liquid level values may be determined. Indeed, in certain cases it is envisaged that it may be sufficient to obtain six new current liquid level values during the third operating mode, and in which case, the value N to which the counter of block 62 of the flowchart of Fig. 4 would be set to the value 6. It will also be appreciated that the fourth predefined time intervals between which the new current liquid level values are determined during the third operating mode may be greater or lesser than six seconds. It will be appreciated that the number of new current liquid level values determined during the third operating mode, and the length of the fourth predefined time intervals will be determined based on a compromise between reliability from the point of view of avoiding false alarms and response time. It will also be appreciated that instead of comparing the stored first liquid level value with the twenty-first liquid level value during the third operating mode in order to determine the change in liquid level during the second predefined time period of the third operating mode, the change in the liquid level during the second predefined time period may be determined by an analysis of all the new current liquid level values determined during the third operating mode.

**Claims**

1. Apparatus for determining the level of a material with fluid-like characteristics in a container, the apparatus comprising a level determining means (7,8,10) for determining the level of the material in the container and for outputting a signal indicative of the level of the material, a control means (8) adapted for alternately operating the level determining means (7,8,10) in one of a first operating mode in which the level determining means (7,8,10) is operated for outputting the signal indicative of the level of the material in the container at first predefined time intervals and a second operating mode in which the level determining means (7,8,10) is operated for determining the level of material in the container at second predefined time intervals, and for outputting the signal indicative of the level of the material in the container at the second predefined time intervals, the second predefined time intervals being shorter than the first predefined time intervals, and the control means (8) being responsive to a change in the level greater than a trigger level change for switching the level determining means (7,8,10) from the first operating mode to the second operating mode, **characterised in that** the level determining means (7,8,10) is operated under the control of the control means (8) in the first operating mode for determining the level of material in the container at third predefined time intervals, and the third predefined time intervals are shorter than the first predefined time intervals and are longer than the second predefined time intervals.

2. Apparatus as claimed in Claim 1 **characterised in that** the level determining means (7,8,10) is operable under the control of the control means (8) in the second operating mode for a first predefined time period.

3. Apparatus as claimed in Claim 1 or 2 **characterised in that** the control means (8) is responsive to the level change determined during a predefined number of consecutive ones of the third predefined time intervals being greater than a first predefined value of the trigger level change for operating the level determining means (7,8,10) in the second operating mode.

4. Apparatus as claimed in Claim 3 **characterised in that** the first predefined value of the trigger level change is greater than the level change which would result from a normal maximum draw-off rate of the material from the container during the predefined number of the consecutive third predefined time intervals.

5. Apparatus as claimed in Claim 3 or 4 **characterised in that** the predefined number of the third predefined time intervals is one.

6. Apparatus as claimed in any of Claims 3 to 5 **characterised in that** prior to operating the level determining means (7,8,10) in the second operating mode the control means (8) is responsive to the level change determined during the predefined number of consecutive ones of the third predefined time intervals being greater than the first predefined value of the trigger level change for operating the level determining means (7,8,10) in a third operating mode for determining if the level change determined during the predefined number of consecutive third predefined time intervals is a spurious value.

7. Apparatus as claimed in Claim 6 **characterised in that** the level determining means (7,8,10) is operable under the control of the control means (8) in the third operating mode for determining the level of material in the container at a predefined number of consecutive fourth predefined time interval.

8. Apparatus as claimed in Claim 7 **characterised in that** the control means (8) is responsive to the level change during the predefined number of the consecutive fourth predefined time interval being greater than a second predefined value of the trigger level change for operating the level determining means (7,8,10) in the second operating mode, the second predefined value of the trigger level change being greater than the level change which would result from a normal maximum draw-off of the material from the container during the predefined number of the consecutive fourth predefined time intervals over which the level change is determined during the third operating mode of the level determining means.

9. Apparatus as claimed in Claim 7 or 8 **characterised in that** values of the levels of the material determined during the third operating mode of the level determining means are sequentially stored by the control means (8), and prior to operating the level determining means (7,8,10) in the second operating mode in response to the level change determined during the predefined number of consecutive fourth predefined time intervals being greater than the second predefined value of the trigger level change, the control means (8) is responsive to the stored values of the levels stored during the third operating mode being indicative of a change in the liquid level for operating the level determining means (7,8,10) in the second operating mode.

10. Apparatus as claimed in any of Claims 6 to 9 **characterised in that** the level determining means (7,8,10) is operable in the third operating mode for a second predefined time period.

11. Apparatus as claimed in any preceding claim **characterised in that** a computing means (8) is provided for computing a moving average value of the level of material in the container in response to each determined value of the level thereof when the level determining means (7,8,10) is operating in one of the first and the second operating modes.

12. Apparatus as claimed in Claim 11 **characterised in that** the signal indicative of the level of the material in the container outputted by the level determining means (7,8,100) operating in the first and second operating modes is derived from the currently computed value of the moving average value of the level of material in the container.

13. Apparatus as claimed in any preceding claim **characterised in that** the level determining means (7) comprises an ultrasonic level determining means.

14. A container comprising apparatus (1) as claimed in any preceding claim.

15. A method for determining the level of a material with fluid-like characteristics in a container, the method comprising providing a level determining means (7,8,10) for determining the level of the material in the container and for outputting a signal indicative of the level of the material, alternately operating the level determining means (7,8,10) in a first operating mode in which the level determining means (7,8,10) is operated for outputting the signal indicative of the level of the material in the container at first predefined time intervals, and in a second operating mode for determining the level of material in the container at second predefined time intervals and for outputting the signal indicative of the level of the material in the container at the second predefined time intervals, the level determining means (7,8,10) being operated in the second operating mode in response to a change in the level being greater than a trigger level change, and the second predefined time intervals being shorter than the first predefined time intervals, **characterised in that** the level determining means (7,8,10) is operated in the first operating mode for determining the level of material in the container at third predefined time intervals, the third predefined time intervals being shorter than the first predefined time intervals and being longer than the second predefined time intervals.

**Patentansprüche**

1. Vorrichtung zur Bestimmung des Füllstands eines Materials mit fluidähnlichen Eigenschaften in einem Behälter, wobei die Vorrichtung eine Füllstandsbestimmungseinrichtung (7, 8, 10) zum Bestimmen des Materialfüllstands in dem Behälter und zum Ausgeben eines den Materialfüllstand anzeigenden Signals und eine Steuereinrichtung (8) aufweist, die zum abwechselnden Betreiben der Füllstandsbestimmungseinrichtung (7, 8, 10) in einer ersten Betriebsart, in der die Füllstandsbestimmungseinrichtung (7, 8, 10) zum Ausgeben des den Materialfüllstand in dem Behälter anzeigenden Signals in ersten vorbestimmten Zeitintervallen betrieben wird, oder in einer zweiten Betriebsart eingerichtet ist, in der die Füllstandsbestimmungseinrichtung (7, 8, 10) zum Bestimmen des Materialfüllstands in dem Behälter in zweiten vorbestimmten Zeitintervallen und zum Ausgeben des den Materialfüllstand in dem Behälter anzeigenden Signals in den zweiten vorbestimmten Zeitintervallen betrieben wird, wobei die zweiten vorbestimmten Zeitintervalle kürzer sind als die ersten vorbestimmten Zeitintervalle und wobei die Steuereinrichtung (8) auf eine Änderung des Füllstands größer als eine Füllstandsänderungsschwelle anspricht, um die Füllstandsbestimmungseinrichtung (7, 8, 10) aus der ersten Betriebsart in die zweite Betriebsart umzuschalten, **dadurch gekennzeichnet, dass** die Füllstandsbestimmungseinrichtung (7, 8, 10) unter der Steuerung der Steuereinrichtung (8) in der ersten Betriebsart dazu betrieben wird, den Materialfüllstand in dem Behälter in dritten vorbestimmten Zeitintervallen zu bestimmen und die dritten vorbestimmten Zeitintervalle kürzer sind als die ersten vorbestimmten Zeitintervalle und länger sind als die zweiten vorbestimmten Zeitintervalle.

2. Vorrichtung nach Anspruch 1,
   **dadurch gekennzeichnet, dass** die Füllstandsbestimmungseinrichtung (7, 8, 10) unter der Steuerung der Steuereinrichtung (8) in der zweiten Betriebsart für eine erste vorbestimmte Zeitdauer betreibbar ist.

3. Vorrichtung nach Anspruch 1 oder 2,
   **dadurch gekennzeichnet, dass** die Steuereinrichtung (8) darauf anspricht, dass die während einer vorbestimmten Anzahl aufeinanderfolgender der dritten vorbestimmten Zeitintervalle ermittelte Füllstandsänderung größer ist als ein erster vorbestimmter Wert der Füllstandsänderungsschwelle, um die Füllstandsbestimmungseinrichtung (7, 8, 10) in der zweiten Betriebsart zu betreiben.

4. Vorrichtung nach Anspruch 3,
   **dadurch gekennzeichnet, dass** der erste vorbestimmte Wert der Füllstandsänderungsschwelle größer ist als die Füllstandsänderung, die aus einer normalen maximalen Entnahmerate des Materials aus dem Behälter während der vorbestimmten Anzahl der aufeinanderfolgenden dritten vorbestimmten Zeitintervalle resultieren würde.

5. Vorrichtung nach Anspruch 3 oder 4,
   **dadurch gekennzeichnet, dass** die vorbestimmte Anzahl der dritten vorbestimmten Zeitintervalle eins ist.

6. Vorrichtung nach einem der Ansprüche 3 bis 5,

**dadurch gekennzeichnet, dass** vor dem Betreiben der Füllstandsbestimmungseinrichtung (7, 8, 10) in der zweiten Betriebsart die Steuereinrichtung (8) darauf anspricht, dass die während der vorbestimmten Anzahl aufeinanderfolgender der dritten vorbestimmten Zeitintervalle ermittelte Füllstandsänderung größer ist als der erste vorbestimmte Wert der Füllstandsänderungsschwelle, um die Füllstandsbestimmungseinrichtung (7, 8, 10) in einer dritten Betriebsart zu betreiben, um festzustellen, ob die während der vorbestimmten Anzahl aufeinanderfolgender dritter vorbestimmter Zeitintervalle ermittelte Füllstandsänderung ein fehlerhafter Wert ist.

7. Vorrichtung nach Anspruch 6,
   **dadurch gekennzeichnet, dass** die Füllstandsbestimmungseinrichtung (7, 8, 10) unter der Steuerung der Steuereinrichtung (8) in der dritten Betriebsart dazu betreibbar ist, den Materialfüllstand in dem Behälter in einer vorbestimmten Anzahl aufeinanderfolgender vierter vorbestimmter Zeitintervalle zu bestimmen.

8. Vorrichtung nach Anspruch 7,
   **dadurch gekennzeichnet, dass** die Steuereinrichtung (8) darauf anspricht, dass die Füllstandsänderung während der vorbestimmten Anzahl der aufeinanderfolgenden vierten vorbestimmten Zeitintervalle größer ist als ein zweiter vorbestimmter Wert der Füllstandsänderungsschwelle, um die Füllstandsbestimmungseinrichtung (7, 8, 10) in der zweiten Betriebsart zu betreiben, wobei der zweite vorbestimmte Wert der Füllstandsänderungsschwelle größer ist als die Füllstandsänderung, die aus einer normalen maximalen Entnahmerate des Materials aus dem Behälter während der vorbestimmten Anzahl der aufeinanderfolgenden vierten vorbestimmten Zeitintervalle resultieren würde, über die die Füllstandsänderung während der dritten Betriebsart der Füllstandsbestimmungseinrichtung ermittelt wird.

9. Vorrichtung nach Anspruch 7 oder 8,
   **dadurch gekennzeichnet, dass** Werte der Füllstände des Materials, die während der dritten Betriebsart der Füllstandsbestimmungseinrichtung ermittelt wurden, fortlaufend durch die Steuereinrichtung (8) gespeichert werden, und dass vor einem Betreiben der Füllstandsbestimmungseinrichtung (7, 8, 10) in der zweiten Betriebsart in Reaktion darauf, dass die während der vorbestimmten Anzahl aufeinanderfolgender vierter vorbestimmter Zeitintervalle bestimmte Füllstandsänderung größer ist als der zweite vorbestimmte Wert der Füllstandsänderungsschwelle, die Steuereinrichtung (8) auf die gespeicherten Werte der während der dritten Betriebsart gespeicherten Füllstände anspricht, die eine Änderung des Flüssigkeitsstandes angeben, um die Füllstandsbestimmungseinrichtung (7, 8, 10) in der zweiten Betriebsart zu betreiben.

10. Vorrichtung nach einem der Ansprüche 6 bis 9, **dadurch gekennzeichnet, dass** die Füllstandsbestimmungseinrichtung (7, 8, 10) in der dritten Betriebsart für eine zweite vorbestimmte Zeitdauer betreibbar ist.

11. Vorrichtung nach einem der vorhergehenden Ansprüche,
**dadurch gekennzeichnet, dass** eine Berechnungseinrichtung (8) vorhanden ist zum Berechnen eines sich ändernden Mittelwertes des Materialfüllstands in dem Behälter in Reaktion auf jeden bestimmten Wert des Füllstands darin, wenn die Füllstandsbestimmungseinrichtung (7, 8, 10) in der ersten oder der zweiten Betriebsart arbeitet.

12. Vorrichtung nach Anspruch 11,
**dadurch gekennzeichnet, dass** das den Materialfüllstand in dem Behälter anzeigende Signal, das durch die in den ersten und zweiten Betriebsarten arbeitende Füllstandsbestimmungseinrichtung (7, 8, 10) ausgegeben wird, aus dem derzeit berechneten Wert des sich ändernden Mittelwerts des Materialfüllstands in dem Behälter abgeleitet wird.

13. Vorrichtung nach einem der vorhergehenden Ansprüche,
**dadurch gekennzeichnet, dass** die Füllstandsbestimmungseinrichtung (7) eine Ultraschallfüllstandsbestimmungseinrichtung aufweist.

14. Behälter mit einer Vorrichtung (1) nach einem der vorhergehenden Ansprüche.

15. Verfahren zum Bestimmen des Füllstands eines Materials mit fluidähnlichen Eigenschaften in einem Behälter, wobei das Verfahren umfasst ein Bereitstellen einer Füllstandsbestimmungseinrichtung (7, 8, 10) zum Bestimmen des Materialfüllstands in dem Behälter und zum Ausgeben eines den Materialfüllstand anzeigenden Signals, ein abwechselndes Betreiben der Füllstandsbestimmungseinrichtung (7, 8, 10) in einer ersten Betriebsart, in der die Füllstandsbestimmungseinrichtung (7, 8, 10) zum Ausgeben des den Materialfüllstand in dem Behälter anzeigenden Signals in ersten vorbestimmten Zeitintervallen betrieben wird, und in einer zweiten Betriebsart zum Bestimmen des Materialfüllstands in dem Behälter in zweiten vorbestimmten Zeitintervallen und zum Ausgeben des den Materialfüllstand in dem Behälter anzeigenden Signals in den zweiten vorbestimmten Zeitintervallen, wobei die Füllstandsbestimmungseinrichtung (7, 8, 10) in Antwort darauf, dass eine Änderung des Füllstands größer ist als eine Füllstandsänderungsschwelle, in der zweiten Betriebsart betrieben wird, wobei die zweiten vorbestimmten Zeitintervalle kürzer sind als die ersten vorbestimmten Zeitintervalle, **dadurch gekennzeichnet, dass** die Füllstandsbestimmungseinrichtung (7, 8, 10) in der ersten Betriebsart zum Bestimmen des Materialfüllstands in dem Behälter in dritten vorbestimmten Zeitintervallen betrieben wird, wobei die dritten vorbestimmten Zeitintervalle kürzer sind als die ersten vorbestimmten Zeitintervalle und länger sind als die zweiten vorbestimmten Zeitintervalle.

## Revendications

1. Appareil de détermination du niveau d'un matériau qui présente les caractéristiques d'un fluide dans un conteneur, l'appareil comprenant un moyen de détermination de niveau (7, 8, 10) destiné à déterminer le niveau du matériau dans le conteneur et à délivrer un signal qui indique le niveau du matériau, un moyen de commande (8) adapté pour faire fonctionner en alternance le moyen de détermination de niveau (7, 8, 10) dans l'un d'un premier mode de fonctionnement dans lequel le moyen de détermination de niveau (7, 8, 10) est déclenché afin de délivrer le signal qui indique le niveau du matériau dans le conteneur à des premiers intervalles de temps prédéfinis et d'un second mode de fonctionnement dans lequel le moyen de détermination de niveau (7, 8, 10) est déclenché afin de déterminer le niveau de matériau dans le conteneur à des seconds intervalles de temps prédéfinis, et de délivrer le signal qui indique le niveau du matériau dans le conteneur aux seconds intervalles de temps prédéfinis, les seconds intervalles de temps prédéfinis étant plus courts que les premiers intervalles de temps prédéfinis, et le moyen de commande (8) réagissant à un changement de niveau supérieur à un changement de niveau de déclenchement destiné à faire passer le moyen de détermination de niveau (7, 8, 10) du premier mode de fonctionnement au second mode de fonctionnement, **caractérisé en ce que** le moyen de détermination de niveau (7, 8, 10) est déclenché sous le contrôle du moyen de commande (8) dans le premier mode de fonctionnement afin de déterminer le niveau de matériau dans le conteneur à des troisièmes intervalles de temps prédéfinis, et les troisièmes intervalles de temps prédéfinis sont plus courts que les premiers intervalles de temps prédéfinis et sont plus longs que les seconds intervalles de temps prédéfinis.

2. Appareil selon la revendication 1, **caractérisé en ce que** le moyen de détermination de niveau (7, 8, 10) peut être déclenché sous le contrôle du moyen de commande (8) dans le second mode de fonctionnement pendant une première période de temps prédéfinie.

3. Appareil selon la revendication 1 ou 2, **caractérisé en ce que** le moyen de commande (8) réagit au changement de niveau déterminé pendant un nombre prédéfini de troisièmes intervalles de temps prédéfinis consécutifs qui sont supérieurs à une première valeur prédéfinie du changement de niveau de déclenchement afin de déclencher le moyen de détermination de niveau (7, 8, 10) dans le second mode de fonctionnement.

4. Appareil selon la revendication 3, **caractérisé en ce que** la première valeur prédéfinie du changement de niveau de déclenchement est supérieure au changement de niveau qui serait provoqué par un débit de soutirage maximal normal du matériau depuis le conteneur pendant le nombre prédéfini de troisièmes intervalles de temps prédéfinis consécutifs.

5. Appareil selon la revendication 3 ou 4, **caractérisé en ce que** le nombre prédéfini de troisièmes intervalles de temps prédéfinis est de un.

6. Appareil selon l'une quelconque des revendications 3 à 5, **caractérisé en ce que**, avant de déclencher le moyen de détermination de niveau (7, 8, 10) dans le second mode de fonctionnement, le moyen de commande (8) réagit au changement de niveau déterminé pendant le nombre prédéfini de troisièmes intervalles de temps prédéfinis consécutifs qui sont supérieurs à la première valeur prédéfinie du changement de niveau de déclenchement destiné à déclencher le moyen de détermination de niveau (7, 8, 10) dans un troisième mode de fonctionnement afin de déterminer si le changement de niveau déterminé pendant le nombre prédéfini de troisièmes intervalles de temps prédéfinis consécutifs est une valeur factice.

7. Appareil selon la revendication 6, **caractérisé en ce que** le moyen de détermination de niveau (7, 8, 10) peut être déclenché sous le contrôle du moyen de commande (8) dans le troisième mode de fonctionnement afin de déterminer le niveau de matériau dans le conteneur à un nombre prédéfini de quatrièmes intervalles de temps prédéfinis consécutifs.

8. Appareil selon la revendication 7, **caractérisé en ce que** le moyen de commande (8) réagit au changement de niveau pendant le nombre prédéfini de quatrièmes intervalles de temps prédéfinis consécutifs qui sont supérieurs à une seconde valeur prédéfinie de changement de niveau de déclenchement destiné à déclencher le moyen de détermination de niveau (7, 8, 10) dans le second mode de fonctionnement, la seconde valeur prédéfinie de changement de niveau de déclenchement étant supérieure au changement de niveau qui serait provoqué par un soutirage maximal normal du matériau depuis le conteneur pendant le nombre prédéfini de quatrièmes intervalles de temps prédéfinis consécutifs pendant lesquels le changement de niveau est déterminé pendant le troisième mode de fonctionnement du moyen de détermination de niveau.

9. Appareil selon la revendication 7 ou 8, **caractérisé en ce que** les valeurs des niveaux de matériau déterminées pendant le troisième mode de fonctionnement du moyen de détermination de niveau sont séquentiellement stockées par le moyen de commande (8), et, avant de déclencher le moyen de détermination de niveau (7, 8, 10) dans le second mode de fonctionnement en réponse au changement de niveau déterminé pendant le nombre prédéfini de quatrièmes intervalles de temps prédéfinis consécutifs qui sont supérieurs à la seconde valeur prédéfinie du changement de niveau de déclenchement, le moyen de commande (8) réagit aux valeurs stockées des niveaux stockés pendant le troisième mode de fonctionnement qui indiquent un changement de niveau de liquide afin de déclencher le moyen de détermination de niveau (7, 8, 10) dans le second mode de fonctionnement.

10. Appareil selon l'une quelconque des revendications 6 à 9, **caractérisé en ce que** le moyen de détermination de niveau (7, 8, 10) peut fonctionner dans le troisième mode de fonctionnement pendant une seconde période de temps prédéfinie.

11. Appareil selon l'une quelconque des revendications précédentes, **caractérisé en ce qu'**un moyen de calcul (8) est prévu pour calculer une valeur de moyenne mobile du niveau de matériau dans le conteneur en réponse à chaque valeur de niveau déterminée lorsque le moyen de détermination de niveau (7, 8, 10) fonctionne dans l'un du premier et du second modes de fonctionnement.

12. Appareil selon la revendication 11, **caractérisé en ce que** le signal qui indique le niveau de matériau dans le conteneur et délivré par le moyen de détermination de niveau (7, 8, 100) qui fonctionne dans le premier et le second modes de fonctionnement est dérivé de la valeur actuellement calculée pour la valeur moyenne mobile du niveau du matériau dans le conteneur.

13. Appareil selon l'une quelconque des revendications précédentes, **caractérisé en ce que** le moyen de détermination de niveau (7) comprend un moyen de détermination de niveau ultrasonique.

14. Conteneur comprenant un appareil (1) selon l'une quelconque des revendications précédentes.

**15.** Procédé de détermination du niveau d'un matériau qui présente les caractéristiques d'un fluide dans un conteneur, le procédé comprenant le fait de prévoir un moyen de détermination de niveau (7, 8, 10) destiné à déterminer le niveau du matériau dans le conteneur et à délivrer un signal qui indique le niveau du matériau, à faire fonctionner en alternance le moyen de détermination de niveau (7, 8, 10) dans un premier mode de fonctionnement dans lequel le moyen de détermination de niveau (7, 8, 10) est déclenché afin de délivrer le signal qui indique le niveau du matériau dans le conteneur à des premiers intervalles de temps prédéfinis, et dans un second mode de fonctionnement destiné à déterminer le niveau de matériau dans le conteneur à des seconds intervalles de temps prédéfinis et à délivrer le signal qui indique le niveau de matériau dans le conteneur aux seconds intervalles de temps prédéfinis, le moyen de détermination de niveau (7, 8, 10) étant déclenché dans le second mode de fonctionnement en réponse à un changement de niveau qui est supérieur à un changement de niveau de déclenchement, et les seconds intervalles de temps prédéfinis étant plus courts que les premiers intervalles de temps prédéfinis, **caractérisé en ce que** le moyen de détermination de niveau (7, 8, 10) est déclenché dans le premier mode de fonctionnement afin de déterminer le niveau de matériau dans le conteneur à des troisièmes intervalles de temps prédéfinis, les troisièmes intervalles de temps prédéfinis étant plus courts que les premiers intervalles de temps prédéfinis et étant plus longs que les seconds intervalles de temps prédéfinis.

Fig.1

Fig. 2

_Fig. 3_

EP 2 131 164 B1

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IE S84011
- EP 0376646 A
- US 20020023490 A